(19) Europäisches Patentamt
European Patent Office
Office européen des brevets

(11) **EP 2 834 311 B1**

(12) **EUROPÄISCHE PATENTSCHRIFT**

(45) Veröffentlichungstag und Bekanntmachung des Hinweises auf die Patenterteilung:
**04.09.2019 Patentblatt 2019/36**

(21) Anmeldenummer: **13716990.0**

(22) Anmeldetag: **04.04.2013**

(51) Int Cl.:
*C09D 127/06* (2006.01)    *B05D 1/32* (2006.01)
*B29B 13/10* (2006.01)    *B29C 41/22* (2006.01)
*C08L 27/06* (2006.01)

(86) Internationale Anmeldenummer:
**PCT/EP2013/057131**

(87) Internationale Veröffentlichungsnummer:
**WO 2013/150112 (10.10.2013 Gazette 2013/41)**

(54) **VERFAHREN ZUR HERSTELLUNG EINES SPRÜHPULVERS MIT VERBESSERTER MORPHOLOGIE ZUR HERSTELLUNG VON KUNSTSTOFF-FORMHÄUTEN**

PROCESS FOR THE FABRICATION OF A SPRAYABLE POWDER COATING COMPOSITION HAVING IMPROVED MORPHOLOGY FOR PRODUCING PLASTIC MOLDED SKINS

PROCÉDÉ DE FABRICATION D'UNE COMPOSITION DE REVÊTEMENT EN POUDRE AVEC UNE MORPHOLOGIE AMÉLIORÉE POUR LA FABRICATION DES PEAUX DE REVÊTEMENT EN PLASTIC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.04.2012 DE 102012205518**

(43) Veröffentlichungstag der Anmeldung:
**11.02.2015 Patentblatt 2015/07**

(73) Patentinhaber: **Resitech Germany GmbH**
**04838 Eilenburg (DE)**

(72) Erfinder: **WEILER, Peter**
**04425 Taucha (DE)**

(74) Vertreter: **Lavoix**
**Bayerstrasse 83**
**80335 München (DE)**

(56) Entgegenhaltungen:
**EP-A1- 2 604 652     WO-A2-2007/101968**
**WO-A2-2008/113615     JP-A- 2000 256 524**
**US-A- 3 988 493     US-A- 6 008 279**

• **Horiba Scientific: "A GUIDEBOOK TO PARTICLE SIZE ANALYSIS", , 5 October 2017 (2017-10-05), pages 1-34, XP055476651, Retrieved from the Internet: URL:https://www.horiba.com/fileadmin/uploads/Scientific/eMag/PSA/Guidebook/pdf/PSA_Guidebook.pdf [retrieved on 2018-05-18]**

EP 2 834 311 B1

**Beschreibung**

Die Erfindung betrifft ein Verfahren zur Herstellung eines Sprühpulvers zur Herstellung von Kunststoff-Formkörpern, insbesondere von Kunststoff-Formhäuten. Die Erfindung betrifft darüber hinaus ein Verfahren zur Herstellung solcher Sprühpulver und deren Verwendung zur Herstellung von Kunststoff-Formkörpern, insbesondere Kunststoff-Formhäuten, insbesondere durch Rotations-Sinterverfahren. Besonders bevorzugt ist die Verwendung der erfindungsgemäßen Sprühpulver zur Herstellung von Kunststoff-Formhäuten im Automobilbereich, der Möbelindustrie, der Bekleidungsindustrie und der Bauindustrie.

In der US 5 840 236 werden PVC-Pulver beschrieben, die nach einem Heiz-Kühlmischerverfahren hergestellt werden. Üblicherweise enthalten diese PVC-Pulver neben PVC, Weichmacher, Stabilisatoren sowie ggf. weitere Additive, die für PVC-Pulver üblich sind. Mit diesen PVC-Pulvern werden nach dem Rotations-Sinterverfahren (Powder-Slush-Moulding-Verfahren) Formkörper aus PVC hergestellt, die in der Innenauskleidung von Kraftfahrzeugen, insbesondere zur Herstellung von Armaturenbrettern und Airbagabdeckungen Anwendung finden.

In der DE 10 2006 046 590 A1 wird ein Verfahren und eine Vorrichtung zur Herstellung von Kunststoff-Formhäuten, insbesondere für Kraftfahrzeuginnenteile, wie z.B. Armaturenbretter und Türverkleidungen, beschrieben. Die Kunststoff-Formhäute werden dabei durch nacheinander erfolgendes mehrfaches Anschmelzen von mehreren Kunststoffpulvern aufgebaut, wobei die Oberfläche des Formwerkzeuges während eines Anschmelzens eines ersten Kunststoffpulvers bereichsweise mit einer Abdeckung oder Maske versehen wird, und wobei ein erstes Kunststoffpulver mittels Pulversprühverfahren auf das Formwerkzeug aufgebracht, danach die Abdeckung oder Maske von der Oberfläche des Formwerkzeuges entfernt wird und das zweite Kunststoffpulver durch Rotationssintern an der Formoberfläche des Formwerkzeuges und an dem ersten Kunststoffpulver aufgebracht wird.

Weitere Verfahren zum Herstellen von Kunststoff-Formhäuten durch Sprühverfahren sind das "In-Mould-Coating" (Beschichtungsverfahren im Formwerkzeug) sowie das "In-Mould-Painting" (Lackierungsverfahren im Formwerkzeug).

Es hat sich gezeigt, dass die im Stand der Technik beschriebenen Sprühpulver bei der Anwendung zur Herstellung von Kunststoff-Formkörpern, insbesondere Kunststoff-Formhäuten, Nachteile aufweisen. So kommt es immer wieder zu Ablagerungen während des Sprühprozesses, die ein Auseinanderbauen und Reinigen der Vorrichtung erfordern. Darüber hinaus tritt ein relativ hoher Verlust des Sprühpulvers in Form von "Overspray" auf, da ein Teil des Sprühpulvers nicht anhaftet und somit verlorengeht.

Durch die schlechte Deckkraft des beschriebenen Sprühpulvers müssen große Schichtdicken aufgebracht werden und die hergestellten Kunststoff-Formhäute weisen eine unerwünschte Porenbildung auf.

Die vorliegende Erfindung hat zur Aufgabe, ein Verfahren zur Herstellung eines Sprühpulvers zur Herstellung von Kunststoff-Formkörpern bereitzustellen, das die oben beschriebenen Nachteile nicht aufweist. Darüber hinaus hat die vorliegende Erfindung die Aufgabe, ein Verfahren zur Herstellung von Kunststoff-Formkörpern, insbesondere von Kunststoff-Formhäuten, zu gestalten, das die oben beschriebenen Nachteile der bisherigen Verfahren überwindet. Außerdem hat die vorliegende Erfindung die Aufgabe, Kunststoff-Formkörper, insbesondere Kunststoff-Formhäute, herzustellen, die gegenüber den nach den bisherigen Verfahren hergestellten, verbesserte Eigenschaften aufweisen.

Diese Aufgabe wird durch ein Verfahren zur Herstellung eines Sprühpulvers gemäß den Merkmalen des Patentanspruchs 1 gelöst. Weitere Ausgestaltungen sind in den Ansprüchen 2-6 dargestellt.

Ein Grundbestandteil der Sprühpulver ist ein Polymer auf Basis von Vinylchlorid. Unter einem Polymer auf Basis von Vinylchlorid soll im Sinne der vorliegenden Erfindung ein Polymer verstanden werden, das zu wesentlichen Teilen aus Vinylchlorid-Einheiten besteht. Unter einem Polymer auf Basis von Vinylchlorid soll im Sinne der vorliegenden Erfindung verstanden werden:

Suspensions-, Emulsions-, Mikro-Suspensions- oder Masse-PVC -- Copolymere aus Vinylchlorid und ethylenisch ungesättigten Monomeren

Als ethylenisch ungesättigte Monomere geeignet sind ein oder mehrere Monomere aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen oder Diolen mit 1 bis 18 C-Atomen, ethylenisch ungesättigte Mono- und Di-Carbonsäuren sowie deren Amide bzw. N-Methylolamide und Nitrile, ethylenisch ungesättigte Sulfonsäuren, ethylenisch ungesättigte heterocyclische Verbindungen, Diene, Olefine, Vinylaromaten und Vinylhalogenide.

Geeignete Vinylester sind solche von Carbonsäuren mit 1 bis 12 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von (alpha)-verzweigten Monocarbonsäuren mit 9 bis 13 C-Atomen, beispielsweise VeoVa9® oder VeoVa10® (Handelsnamen der Firma Shell). Besonders bevorzugt ist Vinylacetat.

Geeignete Monomeren aus der Gruppe Acrylsäureester oder Methacrylsäureester sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Beispiele für geeignete ethylenisch ungesättigte Mono- und Di-Carbonsäuren sowie deren Amide bzw. N-Methylolamide und Nitrile sind Acrylsäure, Methacrylsäure, Fumarsäure, Maleinsäure, Acrylamid, N-Methylolacrylamid, N-Methylolmethacrylamid und Acrylnitril. Beispiele für ethylenisch ungesättigte Sulfonsäuren sind Vinylsulfonsäure und 2-Acrylamido-2-methyl-propansulfonsäure. Geeignete ethylenisch ungesättigte heterocyclische Verbindungen sind Vinylpyrrolidon und Vinylpyridin.

Als Vinylaromaten bevorzugt sind Styrol, Methylstyrol und Vinyltoluol. Bevorzugtes Vinylhalogenid ist Vinylidenchlorid. Die bevorzugten Olefine sind Ethylen, Propylen und die bevorzugten Diene sind 1,3-Butadien und Isopren.

Gegebenenfalls können noch 0.1 bis 50 Gew.-%, bezogen auf das Gesamtgewicht des Monomergemisches, Hilfsmonomere copolymerisiert werden. Bevorzugt werden 0.5 bis 15 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere, wie mehrfach ethylenisch ungesättigte Comonomere, beispielsweise Divinyladipat, Diallylmaleat, Diallylphthalat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypro-pylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder - methacrylat.

Besonders bevorzugt werden Monomere oder Gemische, welche ein oder mehrere Monomere aus der Gruppe Vinylacetat, Vinylester von (alpha)-verzweigten Monocarbonsäuren mit 9 bis 13 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol enthalten.

Die Monomerauswahl bzw. die Auswahl der Gewichtsanteile der Comonomere erfolgt dabei so, dass im allgemeinen eine Glasübergangstemperatur Tg von -50°C bis +120°C, vorzugsweise -30°C bis +95°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. PhysicsSoc. 1, 3, page 123 (1956) gilt:

$$1/Tg = x1/Tg1 + x2/Tg2 + … + xn/Tgn,$$

wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley&Sons, New York (1975) aufgeführt.

Die radikalisch initiierte Copolymerisation der ethylenisch ungesättigten Monomeren mit Vinylchlorid kann grundsätzlich mit allen hierfür bekannten Polymerisationsverfahren erfolgen wie Massepolymerisation, Lösungspolymerisation, Fällungspolymerisation, Suspensionspolymerisation und Emulsionspolymerisation. Bevorzugt werden Masse-, Suspensions- und Emulsionspolymerisation.

Die Polymerisationstemperatur beträgt im Allgemeinen 40°C bis 100°C, vorzugsweise 60°C bis 90°C. Bei der Copolymerisation von gasförmigen Comonomeren wie Ethylen, 1,3-Butadien oder Vinylchlorid kann auch unter Druck, im Allgemeinen zwischen 5 bar und 100 bar, gearbeitet werden. Die Initiierung der Polymerisation kann mit den gebräuchlichen wasserlöslichen bzw. monomerlöslichen Initiatoren oder Redox-Initiator-Kombinationen erfolgen. Beispiele für wasserlösliche Initiatoren sind die Natrium-, Kalium- und Ammoniumsalze der Peroxodischwefelsäure, Wasserstoffperoxid, t-Butylperoxid, Kaliumperoxodiphosphat, t-Butylperoxopivalat, Cumolhydroperoxid, Isopropylbenzolmonohydroperoxid, Azobisisobutyronitril. Beispiele für monomerlösliche Initiatoren sind Dicetylperoxydicarbonat, Dicyclohexylperoxydicarbonat, Dibenzoylperoxid, tert.-Butyl-peroxyneodecanoat, tert.-Butyl-peroxy-2-ethylhexanoat und tert.-Butylperoxypivalat. Die genannten Initiatoren werden im allgemeinen in einer Menge von 0.01 bis 10.0 Gew.-%, bevorzugt 0.1 bis 0.5 Gew.-%, jeweils bezogen auf das Gesamtgewicht der Monomere, eingesetzt. Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat und Ascorbinsäure. Die Reduktionsmittelmenge beträgt im Allgemeinen 0.01 bis 10.0 Gew.-%, bevorzugt 0.1 bis 0.5 Gew.-%, jeweils bezogen auf das Gesamtgewicht der Monomere.

Bei den als bevorzugt genannten Verfahren der Suspensions- und Emulsionspolymerisation wird in Gegenwart von oberflächenaktiven Substanzen wie Schutzkolloiden polymerisiert. Geeignete Schutzkolloide sind beispielsweise teilverseifte Polyvinylalkohole, Polyvinylpyrrolidone, Polyvinylacetale, Stärken, Cellulosen und deren Carboxymethyl-, Methyl-, Hydroxyethyl-, Hydroxypropyl-Derivate.

Die Monomere können insgesamt vorgelegt werden, insgesamt zudosiert werden oder in Anteilen vorgelegt werden und der Rest nach der Initiierung der Polymerisation zudosiert werden. Die Dosierungen können separat (räumlich und zeitlich) durchgeführt werden oder die zu dosierenden Komponenten können alle oder teilweise voremulgiert dosiert werden.

Weitere Polymere auf Basis von Vinylchlorid im Sinne der vorliegenden Erfindung sind:

- Terpolymere aus Ethylen, Vinylchlorid und Carbonylen

- Chloriertes Polyvinylchlorid (CPVC)

- Polyvinylidenchlorid (PVDC)

-- Pfropfcopolymerisate aus Vinylchlorid und EVA

Die Sprühpulver sind durch einen relativ hohen Gehalt an Weichmachern gekennzeichnet. Als Weichmacher kommen dabei alle im Stand der Technik für Polymere auf Vinylchlorid-Basis üblichen Weichmacher in Frage. Besonders bevorzugt sind folgende Weichmacher:

- Abietate, z.B. Methylabietat
- Acetate, z.B. Cumylphenylacetat
- Azelate, z.B. Di(2-ethlhexyl)azelat
- Trimellitate, z.B. Trioctyltrimellitat (TOTM)
- Sebacate, z.B. Dioctylsebacat (DOS), Diisodecylsebacat (DIDS)
- Adipate, z.B. Di(2-ethylhexyl)adipat (DOA), Ditridecyladipat (DTDA)
- PolymereAdipate, z.B. Polypropylenadipat
- Phthalate, z.B. Dioctylphthalat (DOP), Diisononylphthalat (DINP)
- Citrate, z.B. Acetyltri-2-ethylhexylcitrat, Acetyl-2-n-octylcitrat
- Benzoate, z.B. Dipropylenglykol-dibenzoat, Pentaerythritol-tribenzoat
- Tallate, z.B. Isooctyltallat
- Glutarate, z.B. Dicumylphenylglutarat
- Fumarate, z.B. Diisooctylfumarat
- Maleate, z.B. Dioctylmaleat
- Oleate, z.B. Glycerinmonooleat (GMO)
- Palmitate, z.B. Cetylpalmitat
- Paraffin-Verbindungen, z.B. Chlorparaffin
- Phosphate, z.B. Tri(2-ethylhexyl)phosphat
- Epoxy-Verbindungen, z.B. Triethylenglykolester von Fettsäuren, Triethylenglykol-di-2-ethylhexoat, Epoxidiertes Sojaöl
- Laurate, z.B. Glycerinmonolaurat (GML)
- Terephthalate, z.B. Doctylterephthalat (DOTP)
- Sulfonsäure-Verbindungen, z.B. Alkylsulfonsäureester von Phenol
- Stearate, z.B. Butyl-acetoxy-stearat
- Ricinoleate, z.B. n-Butylacetylricinoleat
- Mineralöle.

Die genannten Weichmacher können sowohl einzeln als auch in beliebigen Kombinationen eingesetzt werden.

Die Sprühpulver weisen Stabilisatoren auf. Als Stabilisatoren kommen alle im Stand der Technik für Polymere auf Vinylchlorid-Basis üblichen Stabilisatoren in Frage. Stabilisatoren sind aus der Gruppe ausgewählt, die besteht aus:

- Calcium/Zink-Stabilisatoren

- Barium/Zink-Stabilisatoren
- Zeolithen
- Hydrotalciten
- Perchloraten
- Epoxidiertes Sojaöl

Die genannten Stabilisatoren können sowohl einzeln als auch in beliebiger Kombination eingesetzt werden.

Darüber hinaus ist bevorzugt, dass die Sprühpulver Additive enthalten. Dabei können alle Additive eingesetzt werden, die bei Polymeren auf Basis von Vinylchlorid im Stand der Technik üblich sind. Besonders bevorzugt wird als Additiv mindestens ein Additiv eingesetzt, das aus der Gruppe ausgewählt ist, die besteht aus:

- Pigmenten
- Farbstoffen
- Flammschutzmitteln
- UV-Absorbern
- Entformungshilfsmitteln
- Füllstoffen und
- Antioxidantien.

Die genannten Additive können sowohl einzeln als auch in beliebiger Kombination eingesetzt werden.

Ein besonders wichtiges Merkmal der Sprühpulver ist die Teilchengröße. Erfindungsgemäß weist das Sprühpulver eine Teilchengröße $D_v(0.5) \leq 180\ \mu m$ auf. Die Angabe $D_v(0.5) \leq 180\ \mu m$ ist im Sinne der vorliegenden Erfindung so zu verstehen, dass 50% der Partikel kleiner oder gleich 180 $\mu m$ sind. Dementsprechend bedeutet allgemein die Angabe $D_v(0.5) \leq x\ \mu m$ im Sinne der vorliegenden Erfindung, dass 50% der Partikel kleiner oder gleich x $\mu m$ sind. Erfindungsgemäß wird die Teilchengrößenverteilung mit einem Mastersizer 2000E Optical mit der Methode der Laserdiffraktometrie von der Firma MALVERN bestimmt. Die Ergebnisse der Teilchengrößenverteilung werden als volumetrische Durchmesser (D (v)) angegeben. Der volumetrische Durchmesser bezieht sich auf das Volumen der Partikel.

In einer bevorzugten Ausführungsform weist das erfindungsgemäße Sprühpulver eine Teilchengröße $D_v(0.5) \leq$ etwa 150 $\mu m$, stärker bevorzugt $\leq$ etwa 120 $\mu m$, noch stärker bevorzugt $\leq$ etwa 100 $\mu m$ auf. Besonders gute Ergebnisse werden erzielt, wenn das Sprühpulver eine Teilchengröße $D_v(0.5)$ von etwa 10-100 $\mu m$ aufweist.

Die Teilchen im Sprühpulver können neben der reduzierten Teilchengröße auch eine andere Teilchenform als die aus dem Stand der Technik bekannten Teilchen aufweisen.

Besonders gute Ergebnisse werden erzielt, wenn das Sprühpulver folgende Zusammensetzung aufweist:

- etwa 40-60 Gewichtsteile, insbesondere etwa 50 Gewichtsteile, eines Suspensions-PVC
- etwa 1,5-3,5 Gewichtsteile, insbesondere etwa 2,5 Gewichtsteile, eines Emulsions-PVC
- etwa 2-4 Gewichtsteile, insbesondere etwa 3 Gewichtsteile epoxidiertes Sojaöl (ESO)
- etwa 35-50 Gewichtsteile, insbesondere etwa 42,5 Gewichtsteile Trioctyltrimellitat (TOTM)
- etwa 0,5-3,5 Gewichtsteile, insbesondere etwa 2 Gewichtsteile Ca/Zn-Stabilisator
- etwa 0,5-2,5 Gewichtsteile, insbesondere etwa 1 Gewichtsteil Zeolith
- etwa 0,25-0,75 Gewichtsteile, insbesondere etwa 0,5 Gewichtsteile Pigmente.

Die Sprühpulver zur Herstellung von Kunststoff-Formhäuten weisen gegenüber den aus dem Stand der Technik bekannten Sprühpulvern überraschende Vorteile auf. Ein ganz wesentlicher Unterschied zum erfindungsgemäßen Sprühpulver gegenüber den aus dem Stand der Technik bekannten Sprühpulvern ist dabei die Teilchengröße $D_v(0.5)$ von $\leq$ 180 $\mu m$. Bisher bekannte Sprühpulver weisen eine Teilchengröße $D_v(0.5)$ von > 180 $\mu m$ auf. Überraschenderweise wurde gefunden, dass Kunststoffpulver mit einer Teilchengröße kleiner als 180 $\mu m$ deutliche Vorteile gegenüber dem Stand der Technik bringen. Das durch das Verfahren der Erfindung hergestellte Sprühpulver hat gegenüber dem Stand der Technik folgende Vorteile:

- Verbesserte Sprühfähigkeit,
- keine Ablagerungen in den Zuführschläuchen und in den Düsen,
- Ermöglichung von schnellem und zielgenauem Sprühen,
- bessere und schnellere Gelierung,
- bessere Deckkraft,
- Möglichkeit, dünnere Schichten zu applizieren,
- weniger Abfall des Sprühpulvers durch Overspray,
- gute Haftung an Kanten und schwierig zugänglichen Bereichen.

Diese Vorteile führen im Anwendungsprozess zu reduzierten Zykluszeiten und damit zu erheblichen Kosteneinsparungen.

Dass sich diese Vorteile mit den nach dem Verfahren der Erfindung hergestellten Sprühpulvern erzielen lassen, ist für den Fachmann überraschend. Bislang ist die Fachwelt davon ausgegangen, dass bei Sprühpulvern zur Herstellung von Kunststoff-Formkörpern auf Basis von Vinylchlorid-Polymeren, insbesondere bei vergleichsweise hohem Gehalt an Weichmachern, eine Teilchengröße $D_v(0.5)$ von weniger als 180 $\mu$m zu einer verstärkten Agglomeration, insbesondere bei längerer Lagerung der Pulver, führt. Nun hat sich gezeigt, dass die nach dem Verfahren der Erfindung hergestellten Sprühpulver selbst bei sehr hohen Weichmachergehalten über längere Zeit gelagert werden können, ohne dass zu Agglomerat-Bildung kommt.

Besonders gute Ergebnisse werden erzielt, wenn die Sprühpulver eine Teilchengrößenverteilung aufweisen, die neben einer Teilchengröße $D_v(0.5)$ von $\leq$ 180 $\mu$m dadurch gekennzeichnet ist, dass die Verteilungskurve links und rechts des Maximums symmetrisch verläuft. Eine solche symmetrische Verteilungskurve lässt sich insbesondere dadurch erzielen, dass die Pulvermischung nach dem Mischen der Komponenten im Heiz-Kühlmischer einem Mahlprozess unterzogen wird. Eine Behandlung der Pulvermischungen durch Sieben führt hingegen zu einer eher unsymmetrischen Teilchengrößenverteilung. Es hat sich gezeigt, dass eine nahezu symmetrische Verteilungskurve rechts und links des Maximums zu noch besseren Ergebnissen führt.

Weiterhin werden besonders gute Ergebnisse erzielt, wenn die Sprühpulver eine Teilchengröße von $D_v(0.5)$ von $\leq$ 170 $\mu$m, von $D_v(0.5)$ von $\leq$ 160 $\mu$m, von $D_v(0.5)$ von $\leq$ 150 $\mu$m, von $D_v(0.5)$ von $\leq$ 140 $\mu$m, von $D_v(0.5)$ von $\leq$ 130 $\mu$m, von $D_v(0.5)$ von $\leq$ 120 $\mu$m, von $D_v(0.5)$ von $\leq$ 110 $\mu$m, von $D_v(0.5)$ von $\leq$ 100 $\mu$m, von $D_v(0.5)$ von $\leq$ 90 $\mu$m, von $D_v(0.5)$ von $\leq$ 80 $\mu$m oder von $D_v(0.5)$ von $\leq$ 70 $\mu$m aufweisen.

Die vorliegende Erfindung betrifft beispielsweise ein Verfahren zur Herstellung der beschriebenen Sprühpulver, wobei das Verfahren das Mischen der Bestandteile in einem Heizmischer, und das anschließende Vermahlen der anfallenden Pulvermischung in

- Feinschneidmühlen,
- Prallscheibenmühlen,
- Rohrmühlen,
- Profilmühlen,
- Pralltellermühlen,
- Sichter- und Strahlmühlen,
- Doppelstrommühlen,
- TurboRotor-, HorizontalRotor- und GebläseRotor-Mühlen und/oder
- Kryomühlen

umfasst. In einer bevorzugten Ausführungsform erfolgt das Vermahlen der Pulvermischung in einer TurboRotor-Mühle.

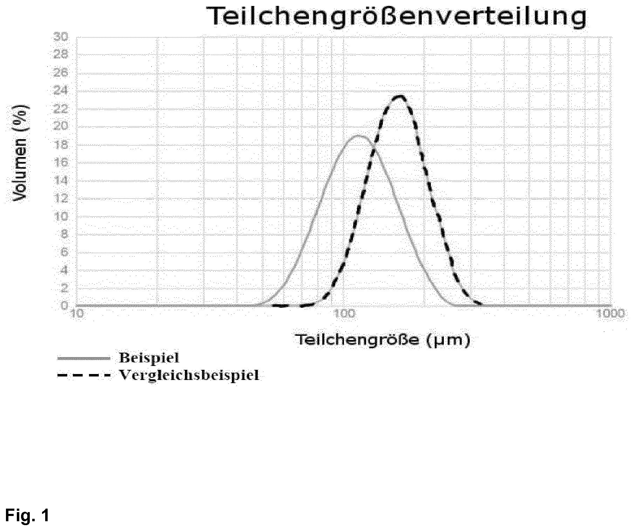

Durch das Vermahlen der Pulvermischung wird eine symmetrische Teilchengrößenverteilung erzielt, wie sie beispielsweise in Fig. 1 gezeigt wird.

Für den Fachmann ist es überraschend, dass die Sprühpulver mit der genannten Teilchengröße durch den beschriebenen Mahlprozess hergestellt werden können. Denn durch die relativ hohen Weichmachergehalte des eingesetzten Materials würde der Fachmann erwarten, dass eine effektive Verkleinerung der Teilchengröße $D_v(0.5)$ auf Werte von $\leq$ 180 $\mu$m durch Mahlen nicht möglich ist. Darüber hinaus gelten PVC-Zusammensetzungen mit den vorliegenden Weichmachergehalten als verhältnismäßig korrosiv, was die Fachwelt bislang davon abgehalten hat, eine Verkleinerung der Teilchengröße $D_v(0.5)$ durch ein solches Mahlverfahren anzustreben. Es hat sich jedoch gezeigt, dass die Verkleinerung der Teilchengröße $D_v(0.5)$ durch Vermahlen gemäß dem erfindungsgemäßen Verfahren möglich ist, ohne dass es zu einer korrosiven Beschädigung der Mühle kommt.

Ein weiteres Merkmal des beanspruchten Verfahrens ist daher, dass die Teilchenform der im Sprühpulver befindlichen Teilchen nach der Mahlung gegenüber der Teilchenform vor der Mahlung verändert ist. Unter Veränderung der Teilchenform im Sinne der vorliegenden Erfindung ist grundsätzlich jede durch den Mahlprozess des Sprühpulvers erzielbare Veränderung der Teilchenform zu verstehen. Die Veränderung der Teilchenform kann beispielsweise in einem vermehrten Auftreten von Bruchkanten gegenüber ungemahlenen Teilchen bestehen. Die durch Mahlung zerkleinerten und formveränderten Teilchen des Sprühpulvers können sich beispielsweise durch Oberflächenzuwachs auszeichnen. So können durch die Mahlung der Teilchen beispielsweise Bruchkanten an den Teilchen entstehen, die zum Oberflächenzuwachs der Teilchen beitragen. Die Formveränderung der Teilchen kann sich auch auf die Haftungseigenschaften des Sprühpulvers vorteilhaft auswirken.

Das Sprühpulver ist durch Mahlung hergestellt. Grundsätzlich sind alle Mahlverfahren geeignet, die zu einer Zerkleinerung und/oder einer Formveränderung der Teilchen im ungemahlenen Sprühpulver führen. Geeignet sind daher grundsätzlich alle dem Fachmann bekannten Mahlverfahren, die zur Zerkleinerung und/oder Formveränderung der Teilchen nach der Mahlung führen beispielsweise Trockenmahlung, Nassmahlung, kontinuierliche, diskontinuierliche oder semikontinuierliche Mahlung. Die Mahlung kann in gekühlter Atmosphäre beispielsweise bei Temperaturen unterhalb von 50°C, unterhalb von 40°C, unterhalb von 30°C, unterhalb von 20°C, unterhalb von 10°C, oder unterhalb von 0°C vorgenommen werden. Gemäß einer Ausführungsform der vorliegenden Erfindung wird das Pulver beispielsweise vor der Mahlung auf eine Temperatur von unter 50°C, unterhalb von 40°C, unterhalb von 30°C, unterhalb von 20°C, unterhalb von 10°C, unterhalb von 0°C, -10°C, unterhalb von - 20°C, oder unterhalb von - 30°C, heruntergekühlt. Eine Ausgestaltung des Mahlverfahrens sieht vor, dass das Mahlgut bzw. das Mischgut aus Mahlgut und Additiv vor Aufgabe in den Mahlbehälter vorgekühlt wird. Zur Kühlung der Atmosphäre im Mahlbehälter auf niedrige Temperaturen eignen sich entsprechend abgekühlte Kältemittel, beispielsweise Trockeneis oder verflüssigte Gase wie flüssiger Stickstoff.

Durch die beschriebene Teilchengrößen-Optimierung ($D_v(0.5) \leq 180 \ \mu m$) des Sprühpulvers können während des Herstellungsprozesses im Heiz-Kühlmischer Verfahren Formulierungen verwendet werden, die normalerweise nicht im Rotations-Sinterverfahren (Powder-Slush-Moulding-Verfahren) eingesetzt werden können. Insbesondere können sehr hohe Gehalte an Pigmenten und/oder Additive verwendet werden, die nach dem Standard Heiz-Kühlmischerverfahren keine frei fließenden Sprühpulver ergeben. Eine Erhöhung der Pigment- und/oder Additiv-Mengen in dem Ausgangsmaterial führt nämlich zu einer stark erhöhten Tendenz der Pulver zur Agglomeration der Teilchen während der Herstellung. Für den Fachmann ist es überraschend, dass die erfindungsgemäßen Sprühpulver auch bei hohen Pigment- und/oder Additiv-Gehalten nach der erfindungsgemäßen Teilchengrößen-Optimierung nicht agglomerieren, sondern dauerhaft fließfähig bleiben, und somit die erfindungsgemäßen Vorteile auch nach längerer Lagerung der Sprühpulver erhalten bleiben.

Die vorliegende Erfindung betrifft auch die Verwendung eines der oben beschriebenen Sprühpulver zur Herstellung von Kunststoff-Formkörpern durch ein Rotations-Sinterverfahren (Powder-Slush-Moulding-Verfahren). Solche Rotations-Sinterverfahren zur Herstellung von Kunststoff-Formkörpern werden beispielsweise in der DE 10 2006 046 590 A1 detailliert beschrieben.

Die zugrundeliegende Aufgabe wird somit auch durch ein Verfahren gemäß den Merkmalen von Patentanspruch 7 gelöst. Weitere Ausgestaltungen sind in den Ansprüchen 8-10 dargestellt.

In einer Ausführungsform der erfindungsgemäßen Verwendung erfolgt die Herstellung von Kunststoff-Formhäuten, insbesondere für Kraftfahrzeuginnenteile, durch ein Rotations-Sinterverfahren, das die folgenden Schritte umfasst:

a) Aufbringen eines ersten Kunststoffpulvers mittels Pulversprühverfahren auf ein Formwerkzeug, wobei das erste Kunststoffpulver gemäß einem der oben beschriebenen Verfahren hergestellt ist, und wobei ausgewählte Bereiche der Oberfläche des Formwerkzeuges mit einer Abdeckung oder Maske versehen sind und wobei das Formwerkzeug während des Sprühens auf einer ersten Temperatur gehalten wird,

b) Erhöhung der Temperatur des Formwerkzeuges, so dass das im Sprühverfahren aufgebrachte erste Kunststoffpulver an den nicht maskierten Bereichen des Formwerkzeuges durch Anschmelzen haftet,

c) Entfernen der Abdeckung oder Maske von der Oberfläche des Formwerkzeuges,

d) Aufsetzen des Formwerkzeuges auf eine ein zweites Kunststoffpulver enthaltende Pulverwanne, wobei das zweite Kunststoffpulver gemäß einem der oben beschriebenen Verfahren hergestellt ist, und wobei die Pulverwanne durch das Aufsetzen des Formwerkzeuges dicht verschlossen wird und wobei die Formoberfläche des Formwerkzeuges zum Innenraum der Pulverwanne zeigt,

e) Versetzen des Formwerkzeuges und der Pulverwanne in Bewegung/Rotation, so dass das zweite Kunststoffpulver über die Formoberfläche des Formwerkzeugs rieselt oder fließt, wobei das zweite Kunststoffpulver durch Rotations-Sintern an der Formoberfläche des Formwerkzeuges an dem ersten Kunststoffpulver durch Anschmelzen haftet,

f) Erhöhen der Temperatur des Formwerkzeuges auf eine Temperatur, bei der das erste und das zweite Kunststoffpulver vollständig zu einer homogenen Kunststoff-Formhaut verschmelzen,

g) Entfernen des Formwerkzeuges von der Pulverwanne und Abkühlen des Formwerkzeuges, so dass die homogene Kunststoff-Formhaut aus dem Formwerkzeug entnommen werden kann.

Besonders gut eignen sich die Sprühpulver zur Verwendung in einem Verfahren zur Herstellung von Kunststoff-Formhäuten die aus verschiedenen Farben oder aus Bereichen mit verschiedener Dichte oder Oberflächenbeschaffenheit aufgebaut sind. In einer besonders bevorzugten Ausführungsform werden mindestens zwei verschiedene Sprühpulver eingesetzt. Dabei unterscheiden sich die beiden eingesetzten Sprühpulver vorzugsweise dadurch, dass sie als unterschiedliche Eigenschaften beispielsweise eine unterschiedliche Farbe, eine unterschiedliche Dichte und/oder eine

unterschiedliche Oberflächebeschaffenheit aufweisen.

In einer besonders bevorzugten Ausführungsform erfolgt die Verwendung der Sprühpulver zur Herstellung von Kunststoff-Formhäuten im Automobil-Innenbereich, insbesondere zur Auskleidung von Instrumententafeln, Handschuhkästen, Kniefängern und Türverkleidungen, in der Möbelindustrie, insbesondere zur Verkleidung von Möbeln, in der Bekleidungsindustrie, insbesondere zur Herstellung von Handtaschen und Kleidungsstücken, oder in der Bauindustrie zur Dekoration von Wänden und Objekten im hochwertigen Wohn- und Objektbereich.

Die vorliegende Erfindung wird nachfolgend anhand von Beispielen noch näher erläutert.

Figur 1 zeigt die Teilchengrößenverteilung eines nach dem Verfahren der Erfindung hergestellten Sprühpulvers gegenüber der in einem herkömmlichen Sprühpulver.

Figur 2 zeigt eine: Kunststoff-Formhaut mit Poren gemäß Sprühpulver und Herstellung des Vergleichsbeispiels.

Figur 3 zeigt eine: Kunststoff-Formhaut ohne Poren hergestellt mit einem nach dem Verfahren der Erfindung hergestellten Sprühpulver (Beispiel 2).

Figur 4 dient als Maßstab für Figuren 2 und 3.

**Beispiele**

Herstellung des Sprühpulvers im Heiz-Kühlmischerverfahren

| Substanz | Beispiel 1 | Beispiel 2 | Vergleichsbeispiel |
|---|---|---|---|
| Suspensions PVC | 100 | 100 | 100 |
| Emulsions PVC | 5 | 5 | 5 |
| EpoxidiertesSojaöl (ESO) | 6 | 6 | 6 |
| Trioctyltrimellitat (TOTM) | 85 | 85 | 85 |
| Ca/Zn Stabilisator | 4 | 4 | 4 |
| Zeolith | 2 | 2 | 2 |
| Pigmente | 1 | 1 | 1 |
| | | | |
| Teilchengröße nach Herstellung | $180\mu m$ | $180\mu m$ | $180\mu m$ |
| Teilchengröße nach Mahlung | $120\mu m$ | $85\mu m$ | --- |

Im Heiz-Kühlmischer wird Suspensions-PVC mit epoxidiertem Sojaöl, Ca/Zn-Stabilisator, Zeolith und den Pigmenten vorgelegt. Anschließend wird das Trioctyltrimellitat langsam bei einer konstanten Temperatur von 90°C zugegeben und nach beendeter Zugabe wird die Pulvermischung bis ca. 140°C ausgemischt. Nach Abkühlung der Pulvermischung wird das Emulsions-PVC bei 50°C eingemischt und das frei fließende Pulver über ein 400 $\mu m$ Sieb abgesiebt.

Sowohl das Sprühpulver aus den Beispielen 1 und 2 und dem Vergleichsbeispiel haben eine Teilchengröße von ca. 180 $\mu m$. Um die erfindungsgemäßen Eigenschaften zu erhalten, wird das Sprühpulver aus den Beispielen 1 und 2 mit einer TurboRotor-Mühle von MAHLTECHNIK GÖRGENS GmbH auf eine Teilchengröße $D_v(0.5)$ von $120\mu m$ gemahlen. Durch Kühlung des Pulvers mit flüssigem Stickstoff oder Trockeneis kann die Teilchengröße $D_v(0.5)$ in Beispiel 2 auf $85\mu m$ weiter verringert werden.

Die Teilchengrößenverteilung des Sprühpulvers gemäß dem Beispiel und gemäß dem Vergleichsbeispiel wurde mit einem Mastersizer 2000E Optical mit der Methode der Laserdiffraktometrie von der Firma MALVERN bestimmt. Das Ergebnis der Messung ist in Fig. 1 wiedergegeben. Wie der Fig. 1 entnommen werden kann, führt die Vermahlung des Sprühpulvers gemäß dem Beispiel gegenüber dem Sprühpulver gemäß dem Vergleichsbeispiel zu einer Verringerung der Teilchengröße $D_v(0.5)$ von etwa 180 $\mu m$ auf etwa 120 $\mu m$, wobei die nahezu symmetrische Verteilung der Teilchengröße zu beiden Seiten des Maximums erhalten bleibt.

Herstellung einer zweifarbigen Kunststoff-Formhaut (Fläche 1 m$^2$) mit einem Sprühpulver aus den Beispielen 1 und 2 und dem Vergleichsbeispiel.

|  | Beispiel 1 | Beispiel 2 | Vergleichsbeispiel |
|---|---|---|---|
| Sprühdauer (Zykluszeit) | 150 Sekunden | 150 Sekunden | 210 Sekunden |
| Sprühtemperatur | 190°C | 185°C | 220°C |
| Overspray | 2% | 2% | 10% |
| Deckkraft | Sehr gut | Sehr gut | Durchscheinende Stellen |
| Schichtdicke | $350\mu m$ | $300\mu m$ | $550\mu m$ |
| Ablagerungen | Keine | keine | Deutlich nach 10 Zyklen |
| Porenbildung | Wenige | keine | Viele |

Ein Teil des Formwerkzeugs wird mit einer Maske abgedeckt. Der freie Teil des Formwerkzeugs wird dem Sprühpulver bei der angegebenen Sprühtemperatur solange besprüht, bis eine vollständige Deckung der Oberfläche erreicht wird. Nach Entfernung der Maske wird die gesprühte und angesinterte Formhaut mit einem zweiten Kunststoffpulver im Powder-Slush-Moulding-Verfahren (Rotations-Sinterverfahren) zu einer homogenen Kunststoff-Formhaut verschmolzen.

Die Sprühdauer wird als die Zeit definiert, die man braucht, bis die Oberfläche komplett mit dem Sprühpulver bedeckt ist. Nach Abschluss des Sprühvorgangs wird die nicht anhaftende Menge an Sprühpulver als Overspray gemessen und die Schichtdicke der ersten nach dem Sprühverfahren hergestellten Kunststoff-Formhaut bestimmt. Die Porenbildung wird durch Beobachtung der Kunststoff-Formhaut unter dem Mikroskop untersucht und die Anzahl und die Größe der Poren bestimmt. Die gesamte Sprühausrüstung wird auf Ablagerungen untersucht.

In der Tabelle ist deutlich zu erkennen, dass das erfindungsgemäße Sprühpulver in den Beispielen eine deutlich geringere Sprühdauer bei einer niedrigeren Sprühtemperatur zur Verarbeitung benötigt. Der Anteil an Overspray ist stark reduziert und die Deckkraft ist viel besser. Durch die bessere Deckkraft wird auch die Porenbildung auf der Kunststoff-Formhaut deutlich verringert. Dies ermöglicht den Einsatz von geringeren Schichtdicken. Die Ablagerungen sind während des Sprühprozesses deutlich reduziert. Alle diese Eigenschaften führen zu deutlichen Kosteneinsparungen und stabileren und besseren Verarbeitungsprozessen.

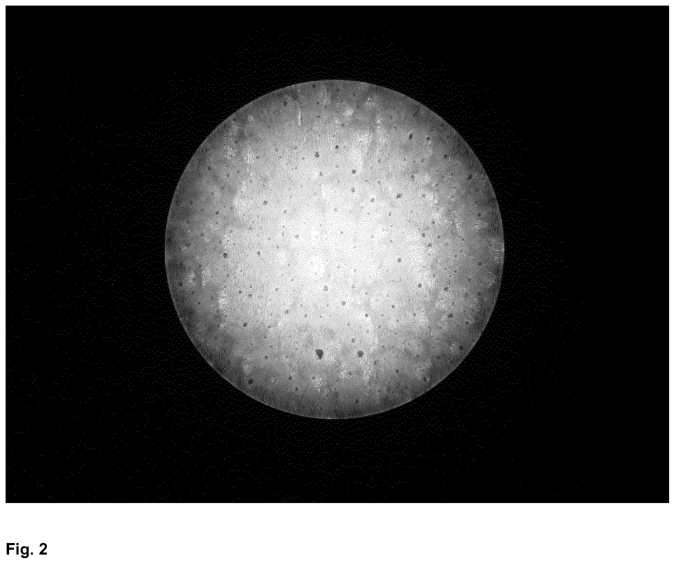

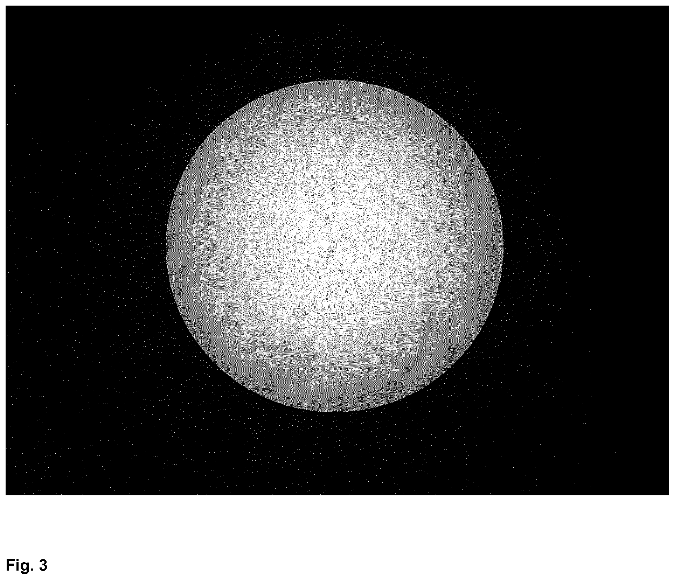

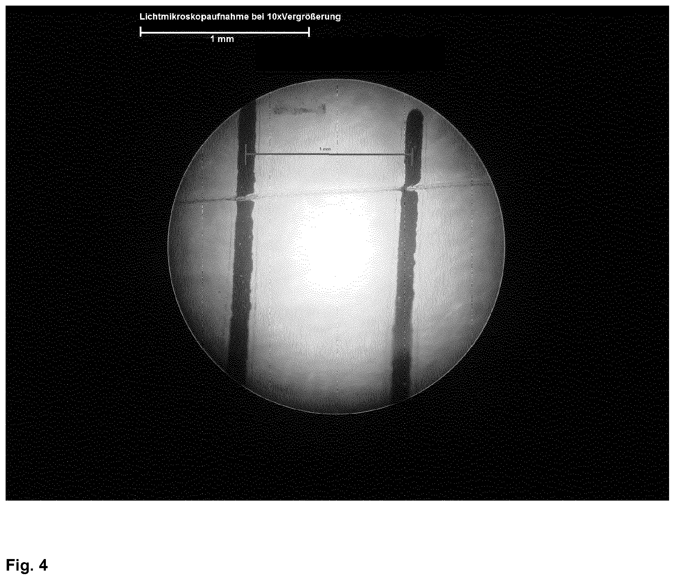

Die Aufnahmen in Abbildungen 2 und 3 wurden mit einem Lichtmikroskop in zehnfacher Auflösung gemacht. In Abbildung 4 ist der Maßstab der Aufnahmen dargestellt.

**Patentansprüche**

1. Verfahren zur Herstellung eines Sprühpulvers, wobei das Sprühpulver zur Herstellung von Kunststoff-Formkörpern bestimmt ist und die Bestandteile umfasst:

   • 10-90 Gewichtsteile des Gesamtgewichtes des Sprühpulvers, mindestens eines Polymers auf Basis von Vinylchlorid, wobei das Polymer auf Basis von Vinylchlorid ausgewählt ist aus mindestens einem Polymer aus der Gruppe, die besteht aus: Suspensions-PVC, Emulsions-PVC, Mikro-Suspensions-PVC und/oder Masse-PVC; Copolymere aus Vinylchlorid und ethylenisch ungesättigten Monomeren ; Terpolymere aus Ethylen, Vinylchlorid und Carbonylen; chloriertes Polyvinylchlorid; Polyvinylidenchlorid; und Pfropfcopolymerisate aus Vinylchlorid und EVA,
   • 10-90 Gewichtsteile des Gesamtgewichtes des Sprühpulvers, mindestens eines Weichmachers,
   • 0-10 Gewichtsteile des Gesamtgewichtes des Sprühpulvers, mindestens eines Stabilisators, wobei das Sprühpulver mindestens eines Stabilisators aufweist, und
   • 0-50 Gewichtsteile des Gesamtgewichtes des Sprühpulvers, mindestens eines Additivs,

   wobei das Sprühpulver eine Teilchengröße $D_v(0.5)$ von $\leq 180\ \mu m$ aufweist, $D_v(0.5) \leq 180\ \mu m$ ist so zu verstehen, dass 50% der Partikel kleiner oder gleich $180\ \mu m$ sind, und die Teilchengrößenverteilung $(D_v)$ mittels Laserdiffrak-tometrie bestimmt und als volumetrische Durchmesser angegeben wird,
   wobei der Stabilisator ausgewählt ist aus mindestens einem Stabilisator aus der Gruppe, die besteht aus:

   • Calcium/Zink-Stabilisatoren
   • Barium/Zink-Stabilisatoren
   • Zeolithe
   • Hydrotalcite

• Perchlorate
• Epoxidiertes Sojaöl, und

wobei die Teilchenform der im Sprühpulver befindlichen Teilchen durch Mahlung der Teilchen verändert wurde.

2. Verfahren gemäß Anspruch 1,
**dadurch gekennzeichnet, dass**
der Weichmacher ausgewählt ist aus mindestens einem Weichmacher aus der Gruppe, die besteht aus:

• Abietate, z.B. Methylabietat
• Acetate, z.B. Cumylphenylacetat
• Azelate, z.B. Di(2-ethlhexyl)azelat
• Trimellitate, z.B. Trioctyltrimellitat (TOTM)
• Sebacate, z.B. Dioctylsebacat (DOS), Diisodecylsebacat (DIDS)
• Adipate, z.B. Di(2-ethylhexyl)adipat (DOA), Ditridecyladipat (DTDA)
• PolymereAdipate, z.B. Polypropylenadipat
• Phthalate, z.B. Dioctylphthalat (DOP), Diisononylphthalat (DINP)
• Citrate, z.B. Acetyltri-2-ethylhexylcitrat, Acetyl-2-n-octylcitrat
• Benzoate, z.B. Dipropylenglykol-dibenzoat, Pentaerythritol-tribenzoat
• Tallate, z.B. Isooctyltallat
• Glutarate, z.B. Dicumylphenylglutarat
• Fumarate, z.B. Diisooctylfumarat
• Maleate, z.B. Dioctylmaleat
• Oleate, z.B. Glycerinmonooleat (GMO)
• Palmitate, z.B. Cetylpalmitat
• Paraffin-Verbindungen, z.B. Chlorparaffin
• Phosphate, z.B. Tri(2-ethylhexyl)phosphat
• Epoxy-Verbindungen, z.B. Triethylenglykolester von Fettsäuren, Triethylenglykol-di-2-ethylhexoat, Epoxidiertes Sojaöl
• Laurate, z.B. Glycerinmonolaurat (GML)
• Terephthalate, z.B. Doctylterephthalat (DOTP)
• Sulfonsäure-Verbindungen, z.B. Alkylsulfonsäureester von Phenol
• Stearate, z.B. Butyl-acetoxy-stearat
• Ricinoleate, z.B. n-Butylacetylricinoleat
• Mineralöle.

3. Verfahren gemäß mindestens einem der vorhergehenden Ansprüche,
**dadurch gekennzeichnet, dass**
das Additiv ausgewählt ist aus mindestens einem Additiv aus der Gruppe, die besteht aus:

• Pigmente
• Farbstoffe
• Flammschutzmittel
• UV-Absorber
• Entformungshilfsmittel
• Füllstoffe
• Antioxidantien.

4. Verfahren gemäß mindestens einem der vorhergehenden Ansprüche,
**dadurch gekennzeichnet, dass**
die Teilchengröße $D_V(0.5)$ des Sprühpulvers $\leq 150 \, \mu m$, insbesondere $\leq 120 \, \mu m$, besonders bevorzugt $\leq 100 \, \mu m$, insbesondere $\leq 90 \, \mu m$, besonders bevorzugt $\leq 80 \, \mu m$ ist oder besonders bevorzugt 10-100 $\mu m$, ist.

5. Verfahren gemäß mindestens einem der vorhergehenden Ansprüche,
**dadurch gekennzeichnet, dass**
das Sprühpulver die folgende Zusammensetzung aufweist:

• 40-60 Gewichtsteile, insbesondere 50 Gewichtsteile, eines Suspensions-PVC

- 1,5-3,5 Gewichtsteile, insbesondere 2,5 Gewichtsteile, eines Emulsions-PVC
- 2-4 Gewichtsteile, insbesondere 3 Gewichtsteile epoxidiertes Sojaöl (ESO)
- 35-50 Gewichtsteile, insbesondere 42,5 Gewichtsteile Trioctyltrimellitat (TOTM)
- 0,5-3,5 Gewichtsteile, insbesondere 2 Gewichtsteile Ca/Zn-Stabilisator
- 0,5-2,5 Gewichtsteile, insbesondere 1 Gewichtsteil Zeolith
- 0,25-2 Gewichtsteile, insbesondere 0,5 Gewichtsteile Pigmente,

wobei das Sprühpulver eine Teilchengröße $D_V(0.5)$ von 100-150 $\mu$m, insbesondere 120 $\mu$m aufweist.

6.  Verfahren gemäß mindestens einem der Ansprüche 1-5, wobei das Verfahren das Mischen der Bestandteile in einem Heiz-Kühl-Mischer, und das anschließende Vermahlen der anfallenden Pulvermischung in mindestens einer Mühle umfasst, die ausgewählt ist aus der Gruppe, die besteht aus:

Feinschneidmühlen,
Prallscheibenmühlen,
Rohrmühlen,
Profilmühlen,
Pralltellermühlen,
Sichter- und Strahlmühlen,
Doppelstrommühlen,
TurboRotor-, HorizontalRotor- und GebläseRotor-Mühlen
und/oder
Kryomühlen.

7.  Verfahren gemäß mindestens einem der Ansprüche 1-6, **dadurch gekennzeichnet, dass** das Sprühpulver zur Herstellung von Kunststoff-Formhäuten, insbesondere für Kraftfahrzeuginnenteile durch ein kombiniertes Rotations-Sinterverfahren verwendet wird, wobei das kombinierte Rotations-Sinterverfahren die folgenden Schritte umfasst:

a) Aufbringen eines ersten Kunststoffpulvers mittels Pulversprühverfahren auf ein Formwerkzeug, wobei die erste Kunststoffpulver gemäß einem Verfahren nach mindestens einem der Ansprüche 1-6 hergestellt ist, und wobei ausgewählte Bereiche der Oberfläche des Formwerkzeuges mit einer Abdeckung oder Maske versehen sind und wobei das Formwerkzeug während des Sprühens auf einer ersten Temperatur gehalten wird,
b) Erhöhung der Temperatur des Formwerkzeuges, so dass das im Sprühverfahren aufgebrachte erste Kunststoffpulver an den nicht maskierten Bereichen des Formwerkzeuges durch Anschmelzen haftet,
c) Entfernen der Abdeckung oder Maske von der Oberfläche des Formwerkzeuges,
d) Aufsetzen des Formwerkzeuges auf eine ein zweites Kunststoffpulver enthaltende Pulverwanne, wobei die zweite Kunststoffpulver gemäß einem Verfahren nach mindestens einem der Ansprüche 1-6 hergestellt ist, und wobei die Pulverwanne durch das Aufsetzen des Formwerkzeuges dicht verschlossen wird und wobei die Formoberfläche des Formwerkzeuges zum Innenraum der Pulverwanne zeigt,
e) Versetzen des Formwerkzeuges und der Pulverwanne in Bewegung/Rotation, so dass das zweite Kunststoffpulver über die Formoberfläche des Formwerkzeugs rieselt oder fließt, wobei das zweite Kunststoffpulver durch Rotations-Sintern an der Formoberfläche des Formwerkzeuges an dem ersten Kunststoffpulver durch Anschmelzen haftet,
f) Erhöhen der Temperatur des Formwerkzeuges auf eine Temperatur, bei der das erste und das zweite Kunststoffpulver vollständig zu einer homogenen Kunststoff-Formhaut verschmelzen,
g) Entfernen des Formwerkzeuges von der Pulverwanne und Abkühlen des Formwerkzeuges, so dass die homogene Kunststoff-Formhaut aus dem Formwerkzeug entnommen werden kann.

8.  Verfahren gemäß Anspruch 7 zur Herstellung von Kunststoff-Formhäuten, die aus verschiedenen Farben oder aus Bereichen mit verschiedener Dichte oder Oberflächenbeschaffenheit aufgebaut sind.

9.  Verfahren gemäß mindestens einem der Ansprüche 7 bis 8 zur Herstellung von Kunststoffformhäuten, wobei mindestens zwei verschiedene Sprühpulver eingesetzt werden.

10. Verfahren gemäß mindestens einem der Ansprüche 7 bis 9 zur Herstellung von Kunststoff-Formhäuten im Automobil-Innenbereich, insbesondere zur Auskleidung von Instrumententafeln, Handschuhkästen, Kniefängern und Türverkleidungen, in der Möbelindustrie, insbesondere zur Verkleidung von Möbeln, in der Bekleidungsindustrie, insbesondere zur Herstellung von Handtaschen und Kleidungsstücken, oder in der Bauindustrie zur Dekoration von Wänden und Objekten im hochwertigen Wohn- und Objektbereich.

**Claims**

1.  Method for the preparation of a spray powder, the spray powder being intended for the production of plastic moldings and comprising the following constituents:

    • 10-90 parts by weight of the total weight of the spray powder, of at least one vinyl chloride-based polymer, wherein the vinyl chloride-based polymer is selected from at least one polymer chosen from the group consisting of: suspension PVC, emulsion PVC, micro-suspension PVC and/or bulk PVC; copolymers of vinyl chloride and ethylenically unsaturated monomers; terpolymers of ethylene, vinyl chloride and carbonyls; chlorinated polyvinyl chloride; polyvinylidene chloride; and graft copolymers of vinyl chloride and EVA,
    • 10-90 parts by weight of the total weight of the spray powder, of at least one plasticizer,
    • 0-10 parts by weight of the total weight of the spray powder, of at least one stabilizer, wherein the spray powder comprises at least one stabilizer, and
    • 0-50 parts by weight of the total weight of the spray powder, at least one additive,

    wherein the spray powder has a particle size $D_V(0.5)$ of $\leq 180\ \mu m$, wherein $D_V(0.5) \leq 180\ \mu m$ is to be understood to mean that 50% of the particles are less than or equal to 180 $\mu m$, and the particle size distribution ($D_V$) determined by laser diffractometry and given as the volumetric diameter,
    wherein the stabilizer is selected from at least one stabilizer from the group consisting of:

    • Calcium/zinc stabilizers
    • Barium/zinc stabilizers
    • Zeolites
    • Hydrotalcites
    • Perchlorates
    • Epoxidized soybean oil, and

    wherein the particle shape of the particles in the spray powder were changed by grinding the particles.

2.  Method according to claim 1, **characterized in that** the plasticizer is selected from among at least one plasticizer from the group consisting of:

    • Abietates, e.g. methyl abietate
    • Acetates, e.g. cumyl phenyl acetate
    • Azelates, e.g. Di(2-ethlhexyl)azelate
    • Trimellitate, e.g. Trioctyl trimellitate (TOTM)
    • Sebacates, e.g. Dioctyl sebacate (DOS), diisodecyl sebacate (DIDS)
    • Adipates, e.g. Di(2-ethylhexyl)adipate (DOA), ditridecyl adipate (DTDA)
    • Polymeric adipates, e.g. polypropylene adipate
    • Phthalates, e.g. dioctyl phthalate (DOP), diisononyl phthalate (DINP)
    • Citrates, e.g. Acetyltri-2-ethylhexyl citrate, acetyl-2-n-octyl citrate
    • Benzoates, e.g. Dipropylene glycol dibenzoate, pentaerythritol tribenzoate
    • Tallates, e.g. Isooctyl tallate
    • Glutarates, e.g. Dicumyl phenyl glutarate
    • Fumarates, e.g. Diisooctyl fumarate
    • Maleates, e.g. dioctyl maleate
    • Oleate, e.g. Glycerol monooleate (GMO)
    • Palmitates, e.g. cetyl palmitate
    • Paraffin compounds, e.g. chlorinated paraffin
    • Phosphates, e.g. Tri (2-ethylhexyl) phosphate
    • Epoxy compounds, e.g. Triethylene glycol esters of fatty acids, triethylene glycol di-2-ethylhexoate, epoxidized soybean oil
    • Laurate, e.g. Glycerol monolaurate (GML)
    • Terephthalates, e.g. Doctyl terephthalate (DOTP)
    • Sulfonic acid compounds, e.g. Alkyl sulfonic acid esters of phenol

• Stearates, e.g. Butyl acetoxy stearate
• Ricinoleates, e.g. n-butyl acetyl
• Mineral oils.

3.  Method according to any one of the preceding claims, **characterized in that** the additive is selected from at least one additive selected from the group consisting of:

    • Pigments
    • Dyes
    • Flame retardant
    • UV absorber
    • Mold release agent
    • Fillers
    • Antioxidants.

4.  Method according to any one of the preceding claims, **characterized in that** the particle size $D_V(0.5)$ of the spray powder is $\leq$ 150 $\mu$m, in particular $\leq$ 120 $\mu$m, particularly preferably $\leq$ 100 $\mu$m, in particular $\leq$ 90 $\mu$m, particularly preferably $\leq$ 80 $\mu$m or particularly preferably 10-100 $\mu$m.

5.  Method according to any one of the preceding claims, **characterized in that** the spray powder has the following composition:

    • 40-60 parts by weight, in particular 50 parts by weight, of a suspension PVC
    • 1.5-3.5 parts by weight, in particular 2.5 parts by weight, of an emulsion PVC
    • 2-4 parts by weight, in particular 3 parts by weight of epoxidized soybean oil (ESO)
    • 35-50 parts by weight, in particular 42.5 parts by weight of trioctyl trimellitate (TOTM)
    • 0.5-3.5 parts by weight, in particular 2 parts by weight of Ca/Zn stabilizer
    • 0.5-2.5 parts by weight, in particular 1 part by weight of zeolite
    • 0.25-2 parts by weight, in particular 0.5 parts by weight of pigments,

    wherein the spray powder has a particle size $D_V(0.5)$ of 100-150 $\mu$m, in particular 120 $\mu$m.

6.  Method according to any one of claims 1-5, wherein the method comprises mixing the ingredients in a heating-cooling mixer, and then grinding the resulting powder mixture in at least one mill selected from the group consisting of:

    - Fine granulators,
    - Baffle plate mills,
    - Tube mills,
    - Profile mills,
    - Turbo mills,
    - Sifter and jet mills,
    - Double-jet mills,
    - Turbo rotor, horizontal rotor and fan rotor mills, and/or
    - Cryogenic mills.

7.  Method according to at least one of claims 1-6, **characterized in that** the spray powder for the production of molded plastic skins, in particular for automotive interior parts, is used in a combined rotational sintering process, wherein the combined rotational sintering process comprises the steps of:

    a) applying a first plastic powder by means of powder spraying on a mold, wherein the first plastic powder is prepared according to a method according to at least one of claims 1-6, and wherein selected regions of the surface of the mold are provided with a cover or mask, and wherein the mold is kept at a first temperature during the spraying,
    b) increasing the temperature of the molding tool so that the first plastic powder applied in the spraying method adheres to the unmasked areas of the molding tool by melting,
    c) removing the cover or mask from the surface of the mold,
    d) placing the mold on a second plastic powder-containing powder tray, wherein the second plastic powder is prepared according to a method according to at least one of claims 1-6, and wherein the powder tray is sealed by the placing of the mold, and wherein the mold surface of the mold faces the interior of the powder tray,

e) moving the mold and the powder tray in motion/rotation so that the second plastic powder trickles or flows over the mold surface of the mold, wherein the second plastic powder adheres to the first plastic powder by fusing through rotational sintering on the mold surface of the mold;

f) raising the temperature of the mold to a temperature at which the first and the second plastic powders completely fuse to form a homogeneous plastic molded skin,

g) removing the mold from the powder tray and cooling the mold, so that the homogeneous plastic molded skin may be removed from the mold.

8. Method according to claim 7 for the production of plastic molded skins, which are formed by different colors or regions of different density or surface finish.

9. Method according to any one of claims 7 to 8 for the production of plastic mold skins, wherein at least two different spray powders are used.

10. Method according to any one of claims 7 to 9 for the production of plastic molded skins in the automotive interior, in particular for lining instrument panels, glove boxes, knee airbags and door panels; in the furniture industry, in particular for the cladding of furniture; in the clothing industry, in particular for the production of handbags and garments; in the construction industry for the decoration of walls and objects in high-quality residential and commercial buildings.

**Revendications**

1. Procédé de fabrication d'une poudre pour pulvérisation, la poudre pour pulvérisation étant destinée à la fabrication d'objets moulés en plastique, et comprenant les constituants suivants :

- 10 à 90 parties en poids, par rapport au poids total de la poudre pour pulvérisation, d'au moins un polymère à base de chlorure de vinyle, le polymère à base de chlorure de vinyle étant choisi parmi au moins un polymère du groupe consistant en le PVC en suspension, le PVC en émulsion, le PVC en micro-suspension et/ou le PVC en masse ; les copolymères de chlorure de vinyle et de monomères à insaturation éthylénique ; les terpolymères d'éthylène, de chlorure de vinyle et de carbonyles ; le poly(chlorure de vinyle) chloré ; le poly(chlorure de vinylidène) ; et les copolymères greffés de chlorure de vinyle et d'EVA,

- 10 à 90 parties en poids, par rapport au poids total de la poudre pour pulvérisation, d'au moins un plastifiant,

- 0 à 10 parties en poids, par rapport au poids total de la poudre pour pulvérisation, d'au moins un stabilisant, la poudre pour pulvérisation comportant au moins un stabilisant, et

- 0 à 50 parties en poids, par rapport au poids total de la poudre pour pulvérisation, d'au moins un additif,

la poudre de pulvérisation présentant une granulométrie $D_v(0,5) \leq 180~\mu m$, $D_v(0,5) \leq 180~\mu m$ devant être comprise en ce sens que 50 % des particules ont une granulométrie $\leq 180~\mu m$, et la distribution granulométrique ($D_v$) étant déterminée par diffractométrie laser et étant exprimée par le diamètre volumétrique,

le stabilisant étant choisi parmi au moins un stabilisant du groupe consistant en :

- les stabilisants au calcium/zinc,
- les stabilisants au baryum/zinc,
- les zéolites,
- les hydrotalcites,
- les perchlorates,
- l'huile de soja époxydée, et

la forme des particules se trouvant dans la poudre pour pulvérisation ayant été modifiée par broyage des particules.

2. Procédé selon la revendication 1, **caractérisé en ce que** le plastifiant est choisi parmi au moins un plastifiant du groupe consistant en :

- les abiétates, p.ex. l'abiétate de méthyle
- les acétates, p.ex. l'acétate de cumylphényle
- les azélates, p.ex. l'azélate de di(2-éthylhexyle)

- les trimellitates, p.ex. le trimellitate de trioctyle (TOTM)
- les sébaçates, p.ex. le sébaçate de dioctyle (DO), le sébaçate de diisodécyle (DIDS)
- les adipates, p.ex. l'adipate de di(2-éthylhexyle) (DOA), l'adipate de ditridécyle (DTDA)
- les adipates polymères, p.ex. le poly(adipate de propylène)
- les phtalates, p.ex. le phtalate de dioctyle (DOP), le phtalate de diisononyle (DINP)
- les citrates, p.ex. l'acétylcitrate de tri-2-éthylhexyle, le citrate d'acétyl-2-n-octyle
- les benzoates, p.ex. le dibenzoate de dipropylèneglycol, le tribenzoate de pentaérythritol
- les tallates, p.ex. le tallate d'isooctyle
- les glutarates, p.ex. le glutarate de dicumylphényle
- les fumarates, p.ex. le fumarate de diisooctyle
- les maléates, p.ex. le maléate de dioctyle
- les oléates, p.ex. le monooléate de glycérol (GMO)
- les palmitates, p.ex. le palmitate de cétyle
- les composés paraffiniques, p.ex. la chloroparaffine
- les phosphates, p.ex. le phosphate de tri(2-éthylhexyle)
- les composés époxy, p.ex. les esters du triéthylèneglycol d'acides gras, le di-2-éthylhexanoate de triéthylèneglycol, l'huile de soja époxydée
- les laurates, p.ex. le monolaurate de glycérol (GML)
- les téréphtalates, p.ex. le téréphtalate de dioctyle (DOTP)
- les composés d'acides sulfoniques, p.ex. les alkylsulfonates de phénol
- les stéarates, p.ex. l'acéto-stéarate de butyle
- les ricinoléates, p.ex. l'acétylricinoléate de n-butyle
- les huiles minérales.

3. Procédé selon au moins l'une des revendications précédentes, **caractérisé en ce que** l'additif est choisi parmi au moins un additif du groupe consistant en :

- les pigments
- les colorants
- les retardateurs de flamme
- les absorbants UV
- les auxiliaires de démoulage
- les matières de charge
- les antioxydants

4. Procédé selon au moins l'une des revendications précédentes, **caractérisé en ce que** la granulométrie $D_V(0,5)$ de la poudre pour pulvérisation est $\leq 150\ \mu m$, en particulier $\leq 120\ \mu m$, d'une manière particulièrement préférée $\leq 100\ \mu m$, en particulier $\leq 90\ \mu m$, d'une manière particulièrement préférée $\leq 80\ \mu m$ ou d'une manière particulièrement préférée de 10 à 100 $\mu m$.

5. Procédé selon au moins l'une des revendications précédentes, **caractérisé en ce que** la poudre pour pulvérisation présente la composition suivante :

- 40 à 60 parties en poids, en particulier 50 parties en poids d'un PVC en suspension,
- 1,5 à 3,5 parties en poids, en particulier 2,5 parties en poids d'un PVC en émulsion,
- 2 à 4 parties en poids, en particulier 3 parties en poids d'huile de soja époxydée (EO),
- 35 à 50 parties en poids, en particulier 42,5 parties en poids de trimellitate de trioctyle (TOTM),
- 0,5 à 3,5 parties en poids, en particulier 2 parties en poids d'un stabilisant au Ca/Zn,
- 0,5 à 2,5 parties en poids, en particulier 1 partie en poids de zéolite,
- 0,25 à 2 parties en poids, en particulier 0,5 partie en poids de pigments,

la poudre pour pulvérisation présentant une granulométrie $D_V(0,5)$ de 100 à 150 $\mu m$, en particulier de 120 $\mu m$.

6. Procédé selon au moins l'une des revendications 1 à 5, le procédé comprenant le mélange des constituants dans un mélangeur réchauffeur-refroidisseur, et le broyage, effectué ensuite, du mélange de poudres ainsi obtenu dans au moins un broyeur, qui est choisi dans le groupe consistant en :

les broyeurs fins à couteaux

les broyeurs à disques centrifuges
les broyeurs à tunnel
les broyeurs à profilés
les broyeurs à couteaux fixes et mobiles
les broyeurs sélecteurs à jets
les broyeurs à double flux
les broyeurs à turbo-rotor, à rotor horizontal et à rotor avec soufflante et/ou
les broyeurs cryogéniques.

7. Procédé selon au moins l'une des revendications 1 à 6, caractérisé e ce que la poudre pour pulvérisation est utilisée pour la fabrication de peaux en matière plastique, en particulier pour éléments intérieurs de véhicules à moteur, par un procédé combiné de rotation-frittage, le procédé combiné de rotation-frittage comprenant les étapes suivantes :

a) application d'une première poudre plastique par un procédé de pulvérisation de poudre sur un moule, la première poudre plastique étant fabriquée conformément à un procédé selon au moins l'une des revendications 1 à 6, et des zones choisies de la surface du moule étant pourvues d'un cache ou d'un masque, et le moule étant, pendant la pulvérisation, maintenu à une première température,
b) élévation de la température du moule, de telle sorte que la première poudre plastique appliquée dans le procédé de pulvérisation adhère, par fusion, aux zones non-masquées du moule,
c) élimination du cache ou du masque de la surface du moule,
d) mise en place du moule sur un bac à poudre, contenant une deuxième poudre plastique, la deuxième poudre plastique étant fabriquée conformément à un procédé selon au moins l'une des revendications 1 à 6, et le bac à poudre étant obturé d'une manière étanche sous l'effet de la mise en place du moule, et la surface du moule étant dirigée vers l'intérieur du bac à poudre,
e) mise en mouvement/rotation du moule et du bac à poudre, de telle sorte que la deuxième poudre plastique s'écoule ou coule sur la surface du moule, la deuxième poudre plastique adhérant par fusion à la première poudre plastique par rotation-frittage sur la surface du moule,
f) élévation de la température du moule à une température à laquelle la première et la deuxième poudres plastiques subissent une fusion complète jusqu'à formation d'une peau homogène en matière plastique,
g) détachement du moule du bac à poudre et refroidissement du moule, de façon que la peau homogène en matière plastique puisse être extraite du moule.

8. Procédé selon la revendication 7, pour la fabrication de peaux en matière plastique, qui sont constituées de différentes couleurs ou de zones ayant différentes densités ou différentes propriétés superficielles.

9. Procédé selon au moins l'une des revendications 7 à 8 pour la fabrication de peaux en matière plastique, par utilisation d'au moins deux poudres pour pulvérisation différentes.

10. Procédé selon au moins l'une des revendications 7 à 9 pour la fabrication de peaux en matière plastique dans le domaine intérieur des automobiles, en particulier pour la garniture de tableaux de bord, de boîtes à gants, de butées pour genoux et de garnitures de portières, dans l'industrie du meuble, en particulier pour la garniture de meubles, dans l'industrie de l'habillement, en particulier pour la fabrication de sacs à main et de pièces de vêtement, ou dans l'industrie de la construction pour la décoration de murs et de bâtiments dans le secteur de l'habitat et du bâtiment haut de gamme.

## Teilchengrößenverteilung

Fig. 1

Fig. 2

Fig. 3

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5840236 A
- DE 102006046590 A1

**In der Beschreibung aufgeführte Nicht-Patentliteratur**

- **FOX T. G.** *Bull. Am. PhysicsSoc.,* 1956, vol. 1 (3), 123
- Polymer Handbook. J. Wiley&Sons, 1975